# EUROPEAN PATENT SPECIFICATION

(11) **EP 1 027 281 B1**
(45) Date of publication and mention of the grant of the patent: **25.07.2001**
(21) Application number: 98951676.0
(22) Date of filing: 29.10.1998
(51) Int. Cl.: C01B 13/11

(54) **A PLASMA OZONE GENERATOR**
PLASMAGENERATOR ZUR OZON-ERZEUGUNG
GENERATEUR D'OZONE PLASMATIQUE

(30) Priority: 31.10.1997 IT LU970017
(43) Date of publication of application: 16.08.2000
(73) Proprietor: Francesconi, Giuseppe, 55100 Lucca (IT)
(72) Inventor: Francesconi, Giuseppe, 55100 Lucca (IT)
(74) Representative: Petruzziello, Aldo
(86) International application number: IT9800302
(87) International publication number: WO9923031

(56) References cited:
- US-A- 4 131 528
- CHEMICAL ABSTRACTS, vol. 110, no. 12, 20 March 1989 Columbus, Ohio, US; abstract no. 98047, MASUDA, SENICHI ET AL: "Production of ozone by surface and glow discharge at cryogenic temperatures" XP002095271 & IEEE TRANS. IND. APPL. (1988), 24(5), 928-33 CODEN: ITIACR;ISSN: 0093-9994,1988,
- CHEMICAL ABSTRACTS, vol. 82, no. 20, 19 May 1975 Columbus, Ohio, US; abstract no. 127017, SAKURAI, HIROSHI ET AL: "Apparatus for supplying ozone" XP002095272 & JP 49 035512 A (JAPAN OXYGEN CO., LTD.)

## Description

The present invention concerns a plasma ozone generator, in particular of the kind with a mean to high ozone production capacity, comprised between 1 and 15 kh/h.

Ozone is an allotropic form of oxygen with the chemical formula O₃.

Ozone is a powerful oxidator and performs its functions mainly in three different ways:
- direct oxidation by addition onto the substratum by means of an ozonolysis;
- direct oxidation on the substratum due to the loss of one oxygen atom;
- catalytic oxidation due to the effect of the oxygen in the ozonized air.

The ozone generators with mean to high capacity are at present used in three main technological processes:
1. in making surface waters drinkable, in eliminating chemical substances which are difficult to be eliminated, like manganese and its compounds, smells, tastes, colours and residual bacterial charges after the precedent chemical/physical treatments;
2. in the depuration of refluent waters of difficult treatment, like those coming from textile industries and that contain high concentrations of surface-active agents or dyes, and which are treated with ozone first or, more often, after the common chemical/biological processes;
3. in the bleaching of cellulose, together with oxygenated water or after the treatment with the latter, for obtaining a higher degree of bleaching and therefore a more valuable product.

The ozone generators used at present are well known: these devices subject a dried air flow or an oxygen flow to dark jump sparks between two electrodes (a dark jump spark or a silent electric discharge is - due to the crown effect - a diffused electrone flow that does not produce sparks and not even arches, which would damage the electrodes used).

The functioning principle of said generators has been the same all the time over, but the efficiency thereof has been continuously and considerably improved until they have reached the actual technological maturity which however does not allow any more substantial improvements.

The ozone generators used at present are complex.

If they are air-fed, they comprise: an air filter, a compressor, a heat exchanger for cooling down the compressed air with discharge of the condensation, a double column for the absorption of the residual moisture until a dew temperature of -40°C and even -60°C, devices for commutating the cycle of the two columns (which are working in phase alternation) from absorption to regeneration, and a device for supplying the warm air for said regeneration, the real ozone generator with its water-cooling, an electric board with a high tension transformer and a possible inerter for increasing the frequency.

If said generators are oxygen-fed, they comprise: the ozone generator with its electric board as described above and furthermore a cryogenic container for the liquid oxygen and the relative evaporator.

As said generators are complex devices, they are also encumbering, expensive and with high maintenance costs. These three elements are negatively determining the cost of the produced ozone. Also the high energy consumption increases the cost of the ozone: 21 Kwh/kg of O₃ produced with air and 12 Kwh/kg of O₃ produced with oxygen; in this latter case, 17 kg of oxygen are used for producing 1 kg of ozone.

A second and relevant difference between the two processes used at present - with air and with oxygen - is the concentration of ozone that may be obtained, which in the first case is of 15-20 g of ozone/ Nm³ and in the second case of 70-80 g of ozone/ Nm³.

It is the aim of the present invention to eliminate above mentioned inconveniences.

The aim set forth is reached by means of a plasma ozone generator, characterized in that it comprises a plasma electric torch in which, at a high temperature and starting from molecular oxygen, a first flow of monoatomic oxygen is generated, and a reaction chamber arranged downstream of said torch, in which the first flow of monoatomic oxygen interacts with a second, cryogenic flow of liquid oxygen, generating a flow of a gaseous cooled mixture, consisting of ozone and molecular oxygen.

The main advantages obtained by means of the present invention are:
- the device for the ozone production is simplier than those used until now;
- the realization cost of the ozone generator is considerable lower than the one of the devices used until now;
- the encumbrance of the device is reduced;
- the energy consumption and maintenance costs are considerably lower than those of the devices used until now.

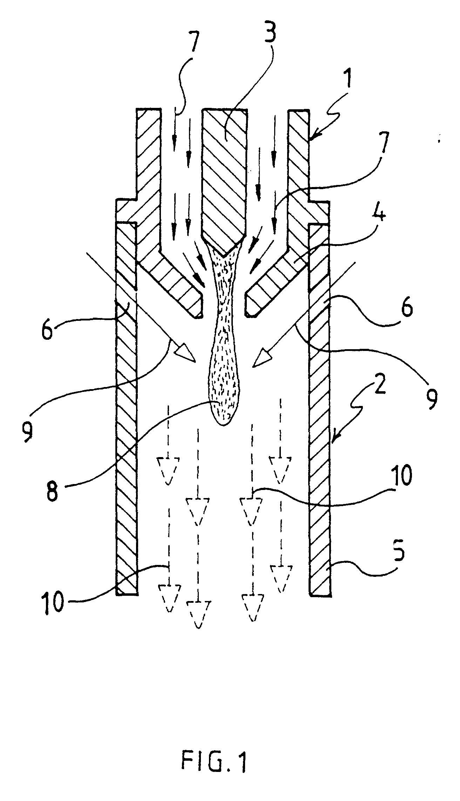

The plasma ozone generator according to the present invention will be described hereinbelow relating to the enclosed figure, in which figure 1 shows a longitudinal section of a plasma ozone generator according to the present invention.

Relating now to the details shown in the figure, the plasma ozone generator mainly comprises an electric, plasma torch 1 and a reaction chamber 2.

The plasma, electric torch 1 in turn comprises a cathode 3 and an earth bushing 4.

The reaction chamber 2 comprises a cylindric tubular element 5 with lights 6.

A first molecular oxygen flow 7 is fed into said plasma electric torch 1, which generates plasma 8. Said plasma 8 consists of monoatomic oxygen produced by the effect of the heating to about 5,000°C said flow 7 caused by the arch discharge which, due to the crown effect, occurs between said cathode 3 and the earth bushing 4.

The temperature of 5,000°C is the one requested for obtaining the complete conversion of the oxygen, from molecular to atomic. This temperature is considerably lower to the one of common plasma torches used for cutting and welding metas, where temperatures of 15,000-30,000°C are reached. This comparatively low operative temperature assures a long duration to the tungsten cathode and to the bushing, which however may be protected from oxidation by means of a galvanic coating of iridium or any other noble metal melting at high temperatures (iridum easily oxidates at temperatures between 600°C and 800°C, but the oxide decomposes at 1,300°C, which means that at higher temperatures it does not undergo oxidation).

The electric board for the feeding of the torch is of known kind, substantially equal to those feeding torches for cutting and welding metals.

The cooling of the cathode may occur with gaseous or liquid oxyge at -180°C (which will be used for producing the plasma), or with water. The cooling of the bushing occurs with air or with water. In the reaction chamber 2, through lights 6, a second, liquid molecular oxygen flow 9 is fed, which combines with the monoatomic oxygen forming said plasma 8, and immediately cools the same, producing a mixture 10 of ozone and molecular oxygen.

The weight relationship between the monoatomic oxygen and the liquid molecular oxygen is of about 1/35, with a production of 2 kg of ozone for each kg of atomic oxygen. This is equivalent to a concentration of about 80 g of ozone/Nm³ , corresponding to the one that may be obtained with the actual ozonizers with pure oxygen.

The shown relationship of 1/35 may be varied for optimizing the costs according to the prices of the liquid oxygen and of electric energy.

Also the consumption of electric energy oscillates according to the chosen operative parameters, but in average it is between 6 and 8 Kwh/kg of produced ozone, i.e. considerably less than the consumptions of the generators used until now.

The plasma ozone generator may be working with atmospheric pressure as we as at a pressure of 1 or 2 atmospheres, so as to supply an ozone mixture that does not need further compressions for being solubilized in water, as it occurs also in the generators used until now.

A variant of the plasma ozonizer as described above provides a relationship between atomic oxygen and cooling molecular oxygen greater than 1/35, therefore with a lower total consumption of oxygen and with a following cooling until an ambient temperature by means of a water ejector, but with lower efficiency: a greater specific consumption of electric energy (meant with Kwh used for producing one kg of ozone) and a lower yield of atomic oxygenin the ozone.

## Claims

1. A plasma ozone generator ***characterized in that*** it comprises a plasma electric torch (1) in which, at high temperatures and starting from molecular oxygen (7), a first flow of monoatomic oxygen (8) is generated, and a reaction chamber (2) downstream of said torch, in which said first monoatomic oxygen (8) flow interacts with a second cryogenic liquid oxygen (9) flow, generating a flow (10) of a cooled gaseous mixture, consisting of ozone and molecular oxygen.

2. A plasma ozone generator according to claim 1, ***characterized in that*** said plasma electric torch (1) works at an efficacious temperature of about 5,000°C.

3. A plasma ozone generator according to claim 1, ***characterized in that*** electrodes (3, 4) of said torch (1) are realized out of a refractory metal coated with a noble metal melting at high temperatures.

4. A plasma ozone generator according to claim 1, ***characterized in that*** said electrodes (3, 4) of said torch (1) are realized out of tungsten coated with a galvanic iridium deposit.

5. A plasma ozone generator according to claim 1, ***characterized in that*** said electrodes (3, 4) of said torch (1) are cooled with a forced cooling system.

6. A plasma ozone generator according to claim 1, ***characterized in that*** said torch (1) and said reaction chamber (2) are working under atmospheric pressure.

7. A plasma ozone generator according to claim 1, ***characterized in that*** said torch (1) and said reaction chamber (2) are working at a pressure higher than the atmospheric one.

8. A plasma ozone generator according to claim 1, ***characterized in that*** a water ejector cools the gaseous mixture of oxygen and ozone.

## Patentansprüche

1. Ein Plasma-Ozonerzeuger, dadurch gekennzeichnet, daß er einen elektrischen Plasmabrenner (1) umfaßt, in dem bei hohen Temperaturen und ausgehend von Molekularsauerstoff (7) ein erster monoatomarer Sauerstoffstrom (8) erzeugt wird, sowie eine Reaktionskammer (2) stromabwärts von dem genannten Brenner, in dem der genannte monoatomare Sauerstoffstrom (8) und einer zweiten kryogenischen flüssigen Sauerstoffstrom (9) aufeinander einwirken, indem sie einen Strom (10) einer gekühlten, gasförmigen Mischung erzeugen, die aus Ozon und Molekularsauerstoff besteht.

2. Ein Plasma-Ozonerzeuger nach Anspruch 1, dadurch gekennzeichnet, daß der genannte elektrische Plasmabrenner (1) bei einer effektiven Temperatur von etwa 5.000°C arbeitet.

3. Ein Plasma-Ozonerzeuger nach Anspruch 1, dadurch gekennzeichnet, daß die Elektroden (3, 4) des genannten Brenners (1) aus hitzefestem Metall bestehen, das mit einem Edelmetall beschichtet ist, welches bei hohen Temperaturen schmilzt.

4. Ein Plasma-Ozonerzeuge nach Anspruch 1, dadurch gekennzeichnet, daß die genannten Elektroden (3, 4) des genannten Brenners (1) aus Wolfram bestehen, das mit einer galvanischen Schicht Iridium versehen ist.

5. Ein Plasma-Ozonerzeuger nach Anspruch 1, dadurch gekennzeichnet, daß die genannten Elektroden (3, 4) des genannten Brenners (1) mit einem Zwangskühlsystem gekühlt werden.

6. Ein Plasma-Ozonerzeuger nach Anspruch 1, dadurch gekennzeichnet, daß der genannte Brenner (1) und die genannte Reaktionskammer (2) mit Luftdruck arbeiten.

7. Ein Plasma-Ozonerzeuger nach Anspruch 1, dadurch gekennzeichnet, daß der genannte Brenner (1) und die genannte Reaktionskammer (2) mit einem höheren Druck als der Luftdruck arbeiten.

8. Ein Plasma-Ozonerzeuger nach Anspruch 1, dadurch gekennzeichnet, daß ein Wasserejektor die gasförmige Mischung aus Sauerstoff und Ozon abkühlt.

## Revendications

1. Générateur d'ozone à plasma caractérisé par le fait qu'il comprend un chalumeau (1) électrique à plasma où est créé, à des températures élevées et en partant d'oxygène moléculaire (7), un premier flux d'oxygène monoatomique (8), et une chambre de réaction (2) en aval dudit chalumeau, où ledit premier flux d'oxygène monoatomique (8) interagit avec un deuxième flux (9) d'oxygène liquide cryogénique, créant un flux (10) d'un mélange gazeux refroidi, composé d'ozone et d'oxygène moléculaire.

2. Générateur d'ozone à plasma selon la revendication 1, caractérisé par le fait que ledit chalumeau électrique à plasma (1) travaille à une température efficace de 5.000°C environ.

3. Générateur d'ozone à plasma selon la revendication 1, caractérisé par le fait que des électrodes (3,4) dudit chalumeau (1) sont réalisées en métal réfractaire revêtu d'un métal noble qui fond à des températures élevées.

4. Générateur d'ozone à plasma selon la revendication 1, caractérisé par le fait que lesdites électrodes (3,4) dudit chalumeau (1) sont réalisées en tungstène revêtu d'un dépôt galvanique d'iridium.

5. Générateur d'ozone à plasma selon la revendication 1, caractérisé par le fait que lesdites électrodes (3, 4) dudit chalumeau (1) sont refroidies par un système de refroidissement forcé.

6. Générateur d'ozone à plasma selon la revendication 1, caractérisé par le fait que ledit chalumeau (1) et ladite chambre de réaction (2) travaillent à la pression atmosphérique.

7. Générateur d'ozone à plasma selon la revendication 1, caractérisé par le fait que ledit chalumeau (1) et ladite chambre de réaction (2) travaillent à une pression plus élevée que la pression atmosphérique.

8. Générateur d'ozone à plasma selon la revendication 1, caractérisé par le fait qu'un éjecteur d'eau refroidit le mélange gazeux d'oxygène et d'ozone.
